# EUROPEAN PATENT SPECIFICATION

(11) **EP 3 517 847 B1**
(45) Date of publication and mention of the grant of the patent: **20.04.2022**
(21) Application number: 19153220.9
(22) Date of filing: 23.01.2019
(51) Int. Cl.: F24F 7/08, F24F 11/00, F24F 13/10, F24F 11/49, G01N 17/00

(54) **TEST ROOM FOR TESTING SYSTEMS**
TESTRAUM FÜR DIE PRÜFUNG VON SYSTEMEN
SALLE D'ESSAI POUR TESTER DES SYSTÈMES

(30) Priority: 25.01.2018 IT 201800001822
(43) Date of publication of application: 31.07.2019
(73) Proprietor: Mitsubishi Electric Hydronics & IT Cooling Systems S.p.A., 36061 Bassano del Grappa (Vicenza) (IT)
(72) Inventor: DEL ZOPPO, Antonio, 3502 Ponte San Nicolò (Padova) (IT); SORMANI, Giancarlo, 35128 Padova (IT); CASSOL, Agostino, 32030 S. Gregorio nelle Alpi (Belluno) (IT)
(74) Representative: Rapisardi, Mariacristina

(56) References cited:
- EP-B1- 2 021 697
- WO-A1-2017/141174
- WO-A1-2017/195007
- DE-C1- 19 637 788
- US-A- 4 957 011
- US-A1- 2012 055 273

## Description

The present invention relates to a test room for testing systems, particularly, but not necessarily for testing heating-cooling systems.

As is well known, there exists a need to carry out tests on heating-cooling systems by reproducing the possible operating climate conditions in order to verify their performance, functionality and reliability. For example, document DE19637788 C1 describes a modular test unit comprising test chambers allowing testing at different climatic conditions.

In particular, it is often necessary to test a heating-cooling system by recreating a temperature- and humidity-controlled environment in an extremely precise manner and in a very broad range.

In the case of technological systems of considerable dimensions, test rooms entail a very large investment, as well as, naturally, a sufficient availability of space.

Test rooms, especially if dimensioned for large-sized systems, sometimes show limited efficiency when used to test systems of a smaller size, and do not enable testing of the whole machine, but only partial testing by dividing power over several circuits.

The technical task of the present invention is to provide a test room which enables the aforesaid drawbacks of the prior art to be overcome.

Within the scope of this task, one object of the invention is to provide a test room with a high flexibility of use which can operate efficiently with systems of varying size.

Another object of the invention is to provide a test room that can be adapted for testing technological systems of varying nature, as well as of varying size.

The technical task, as well as these and other objects, according to the present invention are achieved by providing a test room according to claim 1 and a control method of a test room according to claim 15. The dependent claims define preferred embodiments of the test room.

The test room for testing systems comprises a control unit and sensors for internal and external temperature and humidity, a modular structure comprising modules, wherein each module comprises a compartment for positioning a system to be tested and an aeraulic circuit for conditioning said compartment The aeraulic circuit comprises an air channel for recirculation of air inside the module, an air channel for the partial exchange of air with the environment external to the module, an air channel for the complete exchange of air with the environment external to the module, a means for forced air circulation along said channels, a selective opening means for opening one of said air channels, at least one direct expansion heat exchanger, and at least one water heat exchanger. In a preferred embodiment of the invention, said modules are aligned in series in the horizontal direction of the depth of the test room and extend vertically for the entire height of the test room.

In a preferred embodiment of the invention, the components of each module are distributed on floors at different heights.

In a preferred embodiment of the invention said direct expansion exchanger is positioned at a higher floor with respect to a ground floor on which the system to be tested is positioned.

In a preferred embodiment of the invention, said water exchanger is positioned on a higher floor with respect to said direct expansion exchanger.

In a preferred embodiment of the invention, said aeraulic circuit has an external air intake and an air delivery outlet to the outside for said channels for the exchange of air positioned on a higher floor with respect to said water exchanger.

In a preferred embodiment of the invention, at least two water heat exchangers are provided, one configured to transfer heat to the air and one configured to remove heat from the air.

In a preferred embodiment of the invention, said forced ventilation means comprises at least one fan.

According to the invention said opening means comprises individually controllable gates.

In a preferred embodiment of the invention, there is provided below said modular structure a water tank with a labyrinth-shaped collecting path for supplying the systems to be tested that require water for their normal operation.

In a preferred embodiment of the invention, said aeraulic circuit has double components arranged symmetrically with respect to a central vertical plane of said module.

The present invention also discloses a method for the control of said test room for cooling the ambient air to temperatures of less than 0 °C, as defined in claim 15. The method envisages the following operations in a time sequence:
- selecting the forced circulation of air along the recirculation channel through said water heat exchanger;
- supplying said heat exchanger with glycolated water at a temperature higher than 0°C and lower than the external air temperature introduced into the compartment so as to cool and dehumidify the air through condensation of the vapour contained in the air;
- supplying said heat exchanger (15) with glycolated water at a temperature lower than 0°C and higher than the set temperature so as to cool and dehumidify the air through frosting of the vapour contained in the air;

- selecting the forced circulation of air along the recirculation channel through said direct expansion heat exchanger; and
- activating the direct expansion refrigeration cycle in order to cool the air to the set temperature.

One of the main advantages of the test room in accordance with the invention consists in its modularity, which makes it perfectly adaptable to testing systems of various sizes.

Furthermore, by placing or removing one or more partition walls, it is possible to physically separate or join the modules according to the size and number of systems to be tested.

In this manner, it is in fact possible to recreate different separate environments in the same test room where the various tests can be carried out.

Several systems can be tested in the same test room by dedicating corresponding modules to each of them.

The temperature during the test can be controlled in an extremely precise manner and in a wide interval of values thanks to the combined presence of heat exchangers of a different nature.

The internal humidity can be controlled and maintained at set values by means of dehumidification cycles through the heat exchanger with glycolated water or through the direct expansion exchanger.

It is possible to increase the humidity of the air by means of specific humidification circuits.

Additional features and advantages of the invention will emerge more clearly from the description of a preferred but non-exclusive embodiment of the test room according to the invention, illustrated by way of illustration and not by way of limitation in the appended drawings, in which:
figure 1 schematically shows a front view of the test room in the configuration of the aeraulic circuit in which the internal recirculation of air through the direct expansion heat exchanger is active;
figure 2 schematically shows a front view of the test room in the configuration of the aeraulic circuit in which the internal recirculation of air through the water heat exchanger is active;
figure 3 schematically shows a front view of the test room in the configuration of the aeraulic circuit in which the partial exchange of air with the external environment is active;
figure 4 schematically shows a front view of the test room in the configuration of the aeraulic circuit in which the total exchange of air with the external environment is active;

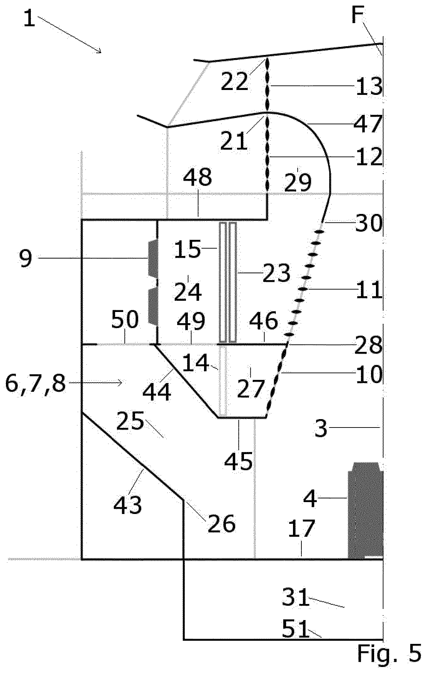

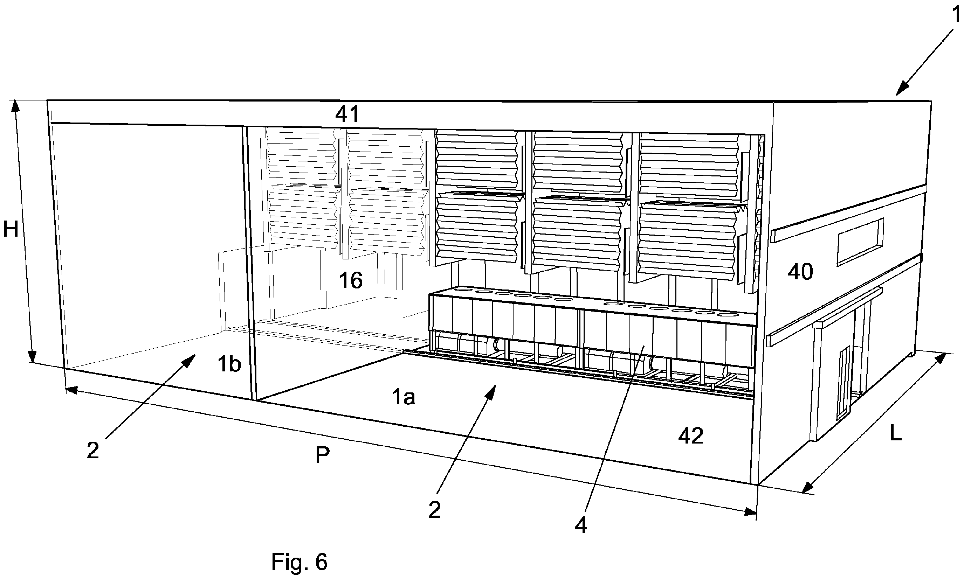

figure 5 schematically shows a front view of a half part of the test room; and figure 6 schematically shows a perspective view of the test room from which its modularity can be seen.

With reference to the aforesaid figures, they show a test room denoted in its entirety by reference number 1, having perimeter walls 40, 41, 42 that define its width L in a horizontal direction, depth P in a horizontal direction and height H in a vertical direction.

The test room 1 advantageously has a modular structure in which modules 2 are aligned in series in the direction of the depth P of the test room 1 and extend for the entire height H of the test room 1.

The test room 1 comprises a control unit (not shown) and sensors for internal and external temperature and humidity (not shown) connected to the control unit. Each of the modules 2 of the test room 1 comprises a positioning compartment 3 for positioning a system 4 to be tested and an aeraulic circuit for conditioning the compartment 3.

The aeraulic circuit comprises an air channel 6 for recirculation of air inside the module 2, an air channel 7 for the partial exchange of air with the environment external to the module 2, and an air channel 8 for the complete exchange of air with the environment external to the module 2.

The aeraulic circuit further comprises a means for forced air circulation along the channels 6, 7 and 8, a selective opening means for opening one channel 6, 7 and 8, at least one direct expansion heat exchanger 14 and at least one water - in particular water and glycol - heat exchanger 15.

The means for forced air circulation along the channels 6, 7 and 8 comprises one or more fans 9.

The selective opening means for opening one of the channels 6, 7 and 8 comprises gates 10, 11, 12, 13 controlled by the control unit.

The gates 10, 11, 12, 13 can be completely or partially open or completely closed. The air channels 6, 7 and 8 of the modules 2 and the positioning compartment 3 are delimited by internal walls 43, 44, 45, 46, 47 of the test room 1 in combination with the external walls 40, 41, 42.

In the test room 1 it is possible to apply at least one vertical partition wall 16 between two adjacent modules 2.

In this manner, at least two independent and separate test subunits 1a, 1b can be created inside the test room 1, each formed by a variable number of modules 2.

For example, if the test room 1 comprises n modules 2 in series, it is possible to create, with a partition wall 16, a first test subunit la of a smaller size, made up of a single module 2, and a second subunit 2b of a larger size, made up of n-1 modules 2 combined in series, wherein the positioning compartments 3, being added spatially in series, enable the placement of a larger-sized system to be tested. If the position of the partition wall 16 is moved along the series of modules 2, the size of the two test subunits 1a, 1b can be varied.

The number and position of the partition walls 16 can be varied as desired.

If, for example, a second partition wall 16 is added, three test subunits can be obtained.

Without partition walls 16 one can have at least a single test unit formed by n modules 2, whereas with n-1 partition walls 16, n test subunits formed by a single module 2 can be obtained.

The various components of the aeraulic circuit are distributed on different floors of the module 2 defined by the horizontal internal walls 45, 46, 48 of the test room 1. Above the ground floor 17, on which the system undergoing testing 4 is positioned, there is provided a first floor at the height of the horizontal internal wall 45 on which the direct expansion exchanger 14 is positioned.

The refrigeration circuit of the refrigerant in a heat exchange with the air, of which the direct expansion exchanger 14 constitutes the evaporator, comprises a compressor, a thermal expansion valve and a condenser placed outside the positioning compartment 3.

Above the first floor there is provided a second floor at the height of the horizontal internal wall 46, on which the water heat exchanger 15 is instead positioned.

On the second floor, preferably, at least two water - particularly water and glycol - heat exchangers are provided, one, denoted by 15, configured to remove heat from the air, and one, denoted by 23, configured to transfer heat to the air. The controller obviously always selectively activates only one of the two heat exchangers 15, 23 according to whether the air needs to be cooled or heated.

The water exchangers 15, 23 comprise suitably sized finned coils.

Above the second floor there is provided a third floor at the height of the horizontal internal wall 48, on which an external air intake mouth 21 and a delivery mouth 22 delivering air to the outside for the air exchange channels 7, 8 are positioned.

The means for the forced circulation of air is also preferably positioned on the same floor on which the water heat exchangers 15, 23 are positioned.

The air channels 6 comprise a first channel 24 that extends along the second floor and has an air intake mouth 30 that opens into the positioning compartment 3, a second channel 25 which connects to the first channel 24 an air delivery mouth 26 that opens into the positioning compartment 3 on the ground floor, a third channel 27 which connects to the first channel 24 an air intake mouth 28 that opens into the positioning compartment 3 on the first floor, and a fourth channel 29 which connects to the first channel 24 the external air intake 21.

A gate, in particular the gate 10, is applied on the air intake mouth 28, another gate, in particular the gate 11, is applied on the air intake mouth 30, another gate, in particular the gate 12, is applied on the external air intake mouth 21, and another gate, in particular the gate 13, is applied on the delivery mouth 22 delivering air to the outside, which communicates directly with the positioning compartment 3. The direct expansion exchanger 14 is disposed transversely in the third channel 27 so as to interact with a flow of air in transit, the water heat exchangers 15, 23 are disposed transversely in the first channel 24 so as to interact with the flow of air in transit.

The air channel 6 for recirculation of air inside the module 2 has two configurations.

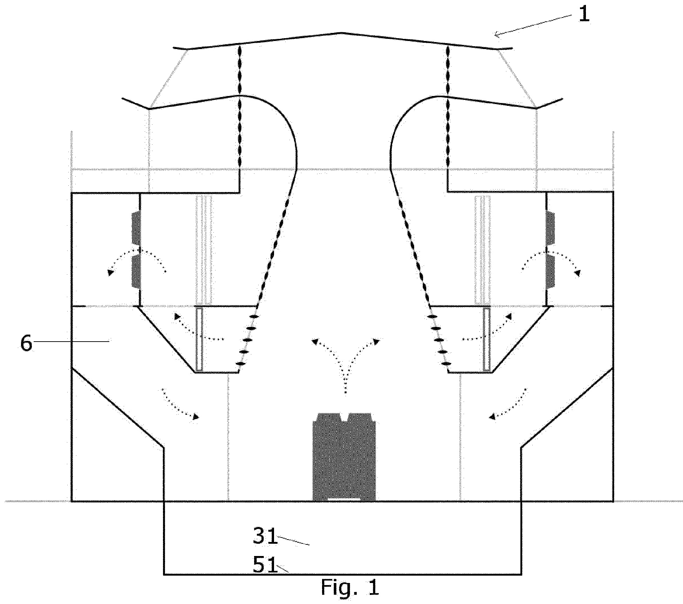

The first configuration (figure 1) corresponds to the opening of the gate 10 and closing of the gates 11, 12 and 13. In this case the air channel 6 for internal recirculation of air comprises in cascade the third channel 27, part of the first channel 24 and the second channel 25. The fans 9 draw from the positioning compartment 3 a flow of air which, thanks to the open gate 10, enters the third channel 27, passes through the direct expansion heat exchanger 14, passes from the third channel 27 to the first channel 24 through a connection opening 49 of the horizontal internal wall 46, passes through the fans 9, passes from the first channel 24 to the second channel 25 through a connection opening 50 of the horizontal internal wall 46, and returns into the positioning compartment 3 exiting from the delivery mouth 26. The closed gates 11, 12 cut out the water heat exchangers 15, 23 from the air circuit.

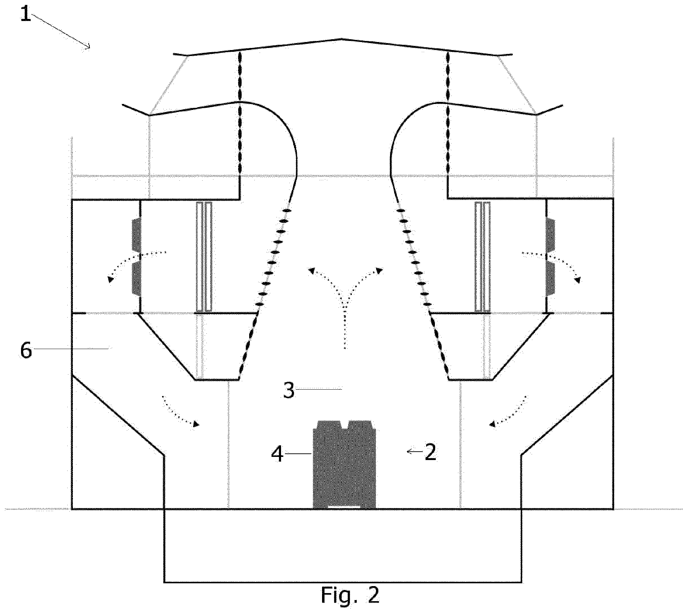

The second configuration (figure 2) corresponds to the opening of the gate 11 and closing of the gates 10, 12 and 13. In this case the air channel 6 for internal recirculation of air comprises in cascade the first channel 24 and the second channel 25. The fans 9 draw from the positioning compartment 3 a flow of air which, thanks to the open gate 11, enters the first channel 24, passes through the water heat exchangers 15, 23, passes from the first channel 24 to the second channel 25 through the connection opening 50 of the horizontal internal wall 46 and returns into the positioning compartment 3, exiting from the delivery mouth 26. The closed gate 10 excludes the direct expansion heat exchanger 14 from the air circuit.

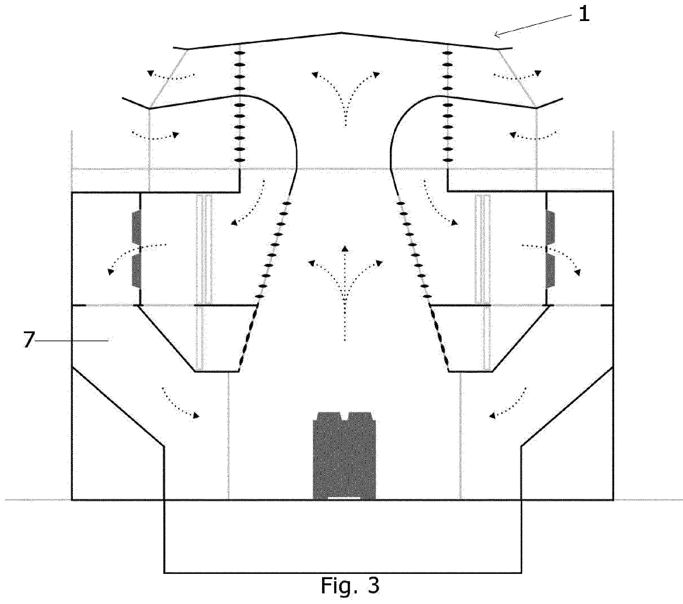

The air channel 7 for the partial exchange of air with the external environment (figure 3) corresponds to the opening of the gates 11, 12 and 13 and closing of the gate 10.

In this case the air channel 7 for the partial exchange of air with the external environment comprises in cascade the fourth channel 29, the first channel 24, and the second channel 25. The fans 9 draw in a flow of air from the positioning compartment 3 and a flow of air from the intake mouth 21. The two air flows are mixed in the first conduit 24 and the resulting air flow passes through the water heat exchangers 15, 23, passes through the fans 9, passes from the first channel 24 to the second channel 25 through the connection opening 50 of the horizontal internal wall 46 and returns into the positioning compartment 3, exiting from the delivery mouth 26 in order to be drawn in, in part, by the fans 9 and in part expelled through the air delivery mouth 22. The closed gate 10 excludes the direct expansion heat exchanger 14 from the air circuit.

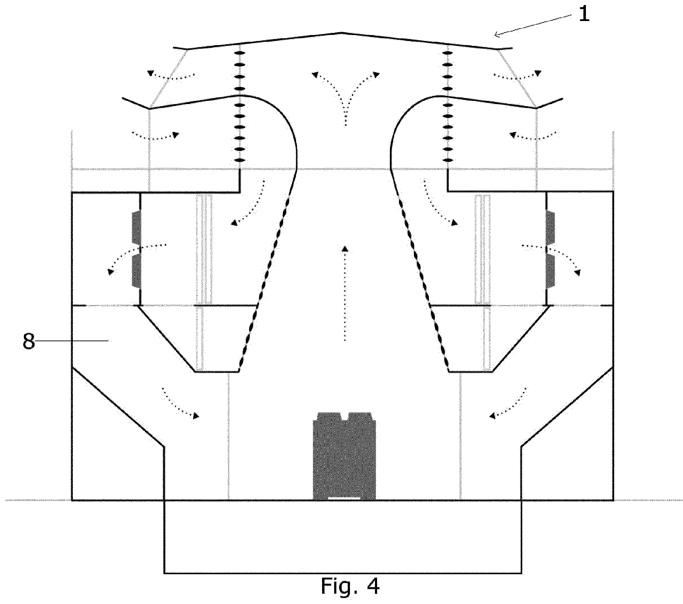

The air channel 8 for a total exchange of air with the external environment (figure 4) corresponds to the opening of the gates 12 and 13 and closing of the gates 10 and 11.

In this case as well, the air channel 8 for a total exchange of air with the external environment comprises in cascade the fourth channel 29, the first channel 24 and the second channel 25. The fans 9 draw in a flow of air from the intake mouth 21.

The flow of air passes through the water heat exchangers 15, 23, passes through the fans 9, passes from the first channel 24 to the second channel 25 through the connection opening 50 of the horizontal internal wall 46 and returns into the positioning compartment 3, exiting from the delivery mouth 26 in order to be entirely expelled through the air delivery mouth 22. The closed gate 10 excludes the direct expansion heat exchanger 14 from the air circuit.

The aeraulic circuit preferably has double components disposed symmetrically with respect to a central vertical floor F of the module 2.

As noted, the test room 1 lends itself particularly well to the testing of heating and cooling systems that require an availability of water in order to operate normally. Advantageously, for this purpose there is provided a water tank 31 with a labyrinth-shaped collecting path positioned below the modular structure, for example on a basement floor 51.

The tank 31 provides the necessary store of water and the labyrinth-shaped collecting path serves to create a remixing that makes the temperature of the mass of circulating water uniform.

The test room 1 can have specific features that improve its efficiency.

For example, some channels and/or the positioning compartment 3 can be tapered for the conversion of kinetic energy into pressure energy or vice versa of the flow of air circulating in them.

In the figures, by way of example, the positioning compartment 3 is tapered towards the top to create a slight negative pressure which draws air into the upper part of the positioning compartment so as to favour the expulsion of the air flow to the outside when operation with a partial and total air exchange is active.

The second channel 25, too, is tapered towards the bottom to create a slight negative pressure which favours the introduction of air into the lower part of the positioning compartment 3.

As noted, the test room must maintain, inside the positioning site, a pre-set temperature or a pre-set temperature profile.

This may mean that the air has to be cooled in certain circumstances and heated in other circumstances.

In this regard it should be noted that in order to heat the compartment 3, the control unit can activate the associated heat exchanger, whereas for cooling the control unit can activate the associated heat exchanger, or if necessary activate the direct refrigeration cycle in which the direct expansion heat exchanger is included in order to make it operate as an evaporator.

Control of the temperature is naturally aided by the internal and external temperature sensors.

The test room lends itself well to the cooling, even very strong cooling, of external air introduced into the compartment.

The control advantageously takes place in the following manner.

Forced circulation of air along the channel is selected, with complete recirculation through the water heat exchanger 15.

Then the heat exchanger 15 is supplied with glycolated water at a temperature higher than 0°C and lower than the temperature of the external air introduced into the compartment 3 so as to cool and dehumidify the air by condensation of the vapour present in the air;

Then the heat exchanger 15 is supplied with glycolated water at a temperature lower than 0°C and higher than the set temperature so as to cool and dehumidify the air through frosting of the vapour present in the air.

Then forced circulation of air along the complete recirculation channel through the direct expansion heat exchanger 14 is selected.

Finally, the direct expansion refrigeration cycle is activated in order to cool the air to the set temperature.

In this manner it is possible to bring the air from the external air conditions to those of a low ambient temperature, for example from + 40°C to -30°C, in the following manner. The gates 10, 12, 13 are closed and the gate 11 is opened so as to obtain a circulation completely internal to the module 2 through the water exchanger 15. Then the heat exchanger is supplied with water 15 at a temperature higher than +1°C so as to cool and dehumidify the air by condensation of the vapour present in the air; then the heat exchanger 15 is supplied with water at a temperature of -15°C so as to cool and dehumidify the air through frosting of the vapour present in the air, then the gate 11 is closed and the gate 10 opened to obtain a circulation completely internal to the module 2 through the direct expansion exchanger 14, and the direct expansion refrigeration cycle is activated with the refrigerant as low as -35°C, bringing the air to temperatures close to -30°C with little formation of frost because most of the initial humidity present in the air has been extracted in the form of dew in the first cooling stage and frost in the second cooling stage.

The test room thus conceived is susceptible of numerous modifications and variants, all falling within the scope of the claims; furthermore, all of the details may be replaced with technically equivalent elements as long these are falling within the scope of the claims.

The materials used, as well as the dimensions, may in practice be of any type, according to needs and the state of the art.

## Claims

1. A test room (1) for testing systems, the test room having a control unit and sensors for internal and external temperature and humidity, and comprising a modular structure having modules wherein each module (2) comprises a positioning compartment (3) configured for positioning a system (4) to be tested and an aeraulic circuit configured for conditioning said compartment (3) comprising an air channel (6) configured for recirculation of air inside the module (2), an air channel (7) configured for the partial exchange of air with the environment external to the module (2), an air channel (8) configured for the complete exchange of air with the environment external to the module (2), a means configured for forced air circulation along said channels (6, 7, 8), wherein the test room further comprises a selective opening means for opening one of said channels (6, 7, 8) comprising individually controllable gates (10, 11, 12, 13), said gates (10, 11, 12, 13) being adapted to be completely or partially open or completely closed by a control unit, at least one direct expansion heat exchanger (14) and at least one water heat exchanger (15).

2. The test room (1) for testing systems according to claim 1, **characterised in that** said modules (2) are aligned in series in the horizontal direction of the depth P of the test room (1) and extend vertically for the entire height H of the test room (1).

3. The test room (1) for testing systems according to claim 1, **characterised in that** the components of each module (2) are distributed on floors at different heights.

4. The test room (1) for testing systems according to the preceding claim, **characterised in that** said water exchanger (15) is positioned at a higher floor with respect to said direct expansion exchanger (14).

5. The test room (1) for testing systems according to any one of claims 3 and 4, **characterised in that** said direct expansion exchanger (14) is positioned at a higher floor with respect to a ground floor on which said system (4) to be tested is positioned.

6. The test room (1) for testing systems according to any one of claims 3 to 5, **characterised in that** said aeraulic circuit has an external air intake mouth (21) and an air delivery mouth (22) to the outside for said channels (7, 8) for the exchange of air positioned at a higher floor with respect to said water exchanger (15).

7. The test room (1) for testing systems according to any one of claims 3 to 6, **characterised in that** said direct expansion heat exchanger (14) is included in a circuit with a refrigeration cycle whose components are installed outside said positioning compartment (3).

8. The test room (1) for testing systems according to any one of the preceding claims, **characterised in that** at least two water heat exchangers (15, 23) are provided, one configured to transfer heat to the air and one configured to remove heat from the air.

9. The test room (1) for testing systems according to claim 1, **characterised in that** said forced ventilation means comprises at least one fan (9).

10. The test room (1) for testing systems according to claim 1, **characterised in that** it comprises below said modular structure a water tank (31) with a labyrinth-shaped collecting path for supplying the systems to be tested that require water for their normal operation.

11. The test room (1) for testing systems according to claim 1, **characterised in that** said aeraulic circuit has double components arranged symmetrically with respect to a central vertical plane of said module (2).

12. The test room (1) for testing systems according to claim 1, **characterised in that** said channels and/or the positioning compartment (3) are tapered so as to be adapted for the conversion of kinetic energy into pressure energy or vice versa of the air flow circulating in said module (2).

13. The test room (1) for testing systems according to claim 1, **characterised in that** it comprises at least one removable partition wall (16) that physically separates two adjacent modules (2).

14. The test room (1) for testing systems according to claim 6 , **characterised in that** the air channel (6) configured for recirculation comprises a first channel (24) that extends along a second floor and has an air intake mouth (30) that opens into the positioning compartment (3), a second channel (25) which connects to the first channel (24) an air delivery mouth (26) that opens into the positioning compartment (3) on a ground floor, a third channel (27) which connects to the first channel (24) an air intake mouth (28) that opens into the positioning compartment (3) on a first floor, and a fourth channel (29) which connects to the first channel (24) the external air intake mouth (21), wherein the gate (10) is applied on the air intake mouth (28), the gate (11) is applied on the air intake mouth (30), the gate (12) is applied on the external air intake mouth (21), and the gate (13) is applied on the delivery mouth (22) delivering air to the outside, which communicates directly with the positioning compartment (3) and wherein said direct expansion exchanger (14) is disposed transversely in the third channel (27) so as to interact with a flow of air in transit and said water heat exchanger (15) is disposed transversely in the first channel (24) so as to interact with the flow of air in transit.

15. A control method of a test room according to the preceding claim for cooling ambient air to temperatures less than 0°C, wherein the method envisages the following operations in a time sequence:
selecting the forced circulation of air along said recirculation channel (6) through said water heat exchanger (15);
supplying said heat exchanger (15) with glycolated water at a temperature higher than 0°C and lower than the external air temperature introduced into the compartment so as to cool and
dehumidify the air through condensation of the vapour contained in the air;
supplying said heat exchanger (15) with glycolated water at a temperature lower than 0°C and higher than a setting temperature so as to cool and dehumidify the air through frosting of the vapour contained in the air;
selecting the forced circulation of air along said recirculation channel (6) through said direct expansion heat exchanger (14); and
activating the direct expansion refrigeration cycle in order to cool the air to the setting temperature.

## Patentansprüche

1. Testraum (1) für die Prüfung von Systemen, wobei der Testraum eine Steuereinheit und Sensoren für Innen- und Außentemperatur und Luftfeuchtigkeit aufweist, und einen modularen Aufbau aufweisend Modulen umfasst, wobei ein jedes Modul (2) eine Positionierungsunterteilung (3), die zum Positionieren eines zu prüfenden Systems (4) ausgelegt ist, und einen lufttechnischen Kreislauf, der zum Konditionieren der Unterteilung (3) ausgelegt ist, umfasst, umfassend einen Luftkanal (6), der zum Rezirkulieren von Luft innerhalb des Moduls (2) ausgelegt ist, einen Luftkanal (7), der für den teilweisen Austausch von Luft mit der Umgebung außerhalb des Moduls (2) ausgelegt ist, einen Luftkanal (8), der für den vollständigen Austausch von Luft mit der Umgebung außerhalb des Moduls (2) ausgelegt ist, Mittel, die für eine Zwangsluftzirkulation entlang der Kanäle (6, 7, 8) ausgelegt sind, wobei der Testraum ferner selektive Öffnungsmittel zum Öffnen eines der Kanäle (6, 7, 8), die individuell steuerbare Klappen (10, 11, 12, 13) umfassen, wobei die Klappen (10, 11, 12, 13) ausgebildet sind, um durch eine Steuereinheit vollständig oder teilweise geöffnet oder vollständig geschlossen zu werden, mindestens einen Direktexpansionswärmeaustauscher (14) und mindestens einen Wasserwärmeaustauscher (15) umfasst.

2. Testraum (1) für die Prüfung von Systemen nach Anspruch 1, **dadurch gekennzeichnet, dass** die Module (2) in horizontaler Richtung der Tiefe P des Testraums (1) in Reihe ausgerichtet sind und sich vertikal über die gesamte Höhe H des Testraums (1) erstrecken.

3. Testraum (1) für die Prüfung von Systemen nach Anspruch 1, **dadurch gekennzeichnet, dass** die Komponenten eines jeden Moduls (2) auf Etagen in unterschiedlichen Höhen verteilt sind.

4. Testraum (1) für die Prüfung von Systemen nach dem vorhergehenden Anspruch, **dadurch gekennzeichnet, dass** der Wasseraustauscher (15) in Bezug auf den Direktexpansionsaustauscher (14) in einer höheren Etage positioniert ist.

5. Testraum (1) für die Prüfung von Systemen nach einem der Ansprüche 3 und 4, **dadurch gekennzeichnet, dass** der Direktexpansionsaustauscher (14) in einer höheren Etage in Bezug auf ein Erdgeschoss positioniert ist, auf dem das zu prüfende System (4) positioniert ist.

6. Testraum (1) für die Prüfung von Systemen nach einem der Ansprüche 3 bis 5, **dadurch gekennzeichnet, dass** der lufttechnische Kreislauf eine äußere Lufteinlassöffnung (21) und eine Luftzufuhröffnung (22) nach außen für die Kanäle (7, 8) für den Luftaustausch aufweist, die in Bezug auf den Wasseraustauscher (15) in einer höheren Etage positioniert sind.

7. Testraum (1) für die Prüfung von Systemen nach einem der Ansprüche 3 bis 6, **dadurch gekennzeichnet, dass** der Direktexpansionsaustauscher (14) in einem Kreislauf mit einem Kühlkreislauf enthalten ist, dessen Komponenten außerhalb der Positionierungsunterteilung (3) installiert sind.

8. Testraum (1) für die Prüfung von Systemen nach einem der vorhergehenden Ansprüche, **dadurch gekennzeichnet, dass** mindestens zwei Wasserwärmeaustauscher (15, 23) bereitgestellt sind, von denen einer so ausgelegt ist, dass er Wärme an die Luft überträgt, und einer so ausgelegt ist, dass er Wärme aus der Luft abführt.

9. Testraum (1) für die Prüfung von Systemen nach Anspruch 1, **dadurch gekennzeichnet, dass** die Zwangsbelüftungsmittel mindestens ein Gebläse (9) umfassen.

10. Testraum (1) für die Prüfung von Systemen nach Anspruch 1, **dadurch gekennzeichnet, dass** er unterhalb des modularen Aufbaus einen Wassertank (31) mit einem labyrinthförmigen Sammelweg zum Versorgen der zu prüfenden Systeme, die Wasser für ihren normalen Betrieb benötigen, umfasst.

11. Testraum (1) für die Prüfung von Systemen nach Anspruch 1, **dadurch gekennzeichnet, dass** der lufttechnische Schaltkreis Doppelkomponenten aufweist, die symmetrisch in Bezug auf eine vertikale Mittelebene des Moduls (2) angeordnet sind.

12. Testraum (1) für die Prüfung von Systemen nach Anspruch 1, **dadurch gekennzeichnet, dass** sich die Kanäle und/oder die Positionierungsunterteilung (3) verjüngen, um sich an die Umwandlung von kinetischer Energie in Druckenergie oder umgekehrt des in dem Modul (2) zirkulierenden Luftstroms anzupassen.

13. Testraum (1) für die Prüfung von Systemen nach Anspruch 1, **dadurch gekennzeichnet, dass** er mindestens eine entfernbare Trennwand (16) umfasst, die zwei benachbarte Module (2) physisch trennt.

14. Testraum (1) für die Prüfung von Systemen nach Anspruch 6, **dadurch gekennzeichnet, dass** der für die Rezirkulation konfigurierte Luftkanal (6) einen ersten Kanal (24), der sich entlang einer zweiten Etage erstreckt und eine Lufteinlassöffnung (30) aufweist, die in die Positionierungsunterteilung (3) mündet, einen zweiten Kanal (25), der mit dem ersten Kanal (24) eine Luftzufuhröffnung (26) verbindet, die in die Positionierungsunterteilung (3) in ein Erdgeschoss mündet, einen dritten Kanal (27), der mit dem ersten Kanal (24) eine Lufteinlassöffnung (28) verbindet, die in die Positionierungsunterteilung (3) in einer ersten Etage mündet, und einen vierten Kanal (29), der mit dem ersten Kanal (24) die äußere Lufteinlassöffnung (21) verbindet, umfasst, wobei die Klappe (10) an der Lufteinlassöffnung (28) angebracht ist, und die Klappe (11) an der Lufteinlassöffnung (30) angebracht ist, die Klappe (12) an der äußeren Lufteinlassöffnung (21) angebracht ist und die Klappe (13) an der Zufuhröffnung (22) angebracht ist, die Luft nach außen zuführt, die direkt mit der Positionierungsunterteilung (3) kommuniziert, und wobei der Direktexpansionsaustauscher (14) quer im dritten Kanal (27) angeordnet ist, um mit einem durchlaufenden Luftstrom zusammenzuwirken und der Wasserwärmeaustauscher (15) quer im ersten Kanal (24) angeordnet ist, um mit dem durchlaufenden Luftstrom zusammenzuwirken.

15. Steuerverfahren eines Testraums nach dem vorhergehenden Anspruch zum Kühlen von Umgebungsluft auf Temperaturen unter 0 °C, wobei das Verfahren die folgenden Vorgänge in einer Zeitsequenz vorsieht:
Auswählen der Zwangsluftzirkulation entlang des Rezirkulationskanals (6) durch den Wasserwärmeaustauscher (15);
Versorgen des Wärmeaustauschers (15) mit glykolisiertem Wasser bei einer Temperatur höher als 0 °C und niedriger als die Außenlufttemperatur, die in die Unterteilung eingeführt wird, um die Luft durch Kondensation des in der Luft enthaltenen Dampfes zu kühlen und zu entfeuchten;
Versorgen des Wärmeaustauschers (15) mit glykolisiertem Wasser bei einer Temperatur niedriger als 0 °C und höher als einer Einstelltemperatur, um die Luft durch Frost des in der Luft enthaltenen Dampfes zu kühlen und zu entfeuchten;
Auswählen der Zwangsluftzirkulation entlang des Rezirkulationskanals (6) durch den Direktexpansionswärmeaustauscher (14); und
Aktivieren des Direktexpansionskältekreislaufs, um die Luft auf die Einstelltemperatur zu kühlen.

## Revendications

1. Salle d'essai (1) pour tester des systèmes, la salle d'essai comportant une unité de commande et des capteurs pour la température et l'humidité intérieures et extérieures, et comprenant une structure modulaire comportant des modules dans laquelle chaque module (2) comprend un compartiment de positionnement (3) configuré pour positionner un système (4) à tester et un circuit aéraulique configuré pour conditionner ledit compartiment (3) comprenant un canal d'air (6) configuré pour la recirculation de l'air à l'intérieur du module (2), un canal d'air (7) configuré pour l'échange partiel d'air avec l'environnement extérieur au module (2), un canal d'air (8) configuré pour l'échange complet d'air avec l'environnement extérieur au module (2), des moyens configurés pour une circulation d'air forcée le long desdits canaux (6, 7, 8), dans laquelle la salle d'essai comprend de plus des moyens d'ouverture sélectifs pour ouvrir l'un desdits canaux (6, 7, 8) comprenant des portes contrôlables (10, 11, 12, 13) individuellement, lesdites portes (10, 11, 12, 13) étant adaptées pour être complètement ou partiellement ouvertes ou complètement fermées par une unité de commande, au moins un échangeur de chaleur à détente directe (14) et au moins un échangeur de chaleur à eau (15).

2. Salle d'essai (1) pour tester des systèmes selon la revendication 1, **caractérisée en ce que** lesdits modules (2) sont alignés en série dans la direction horizontale de la profondeur P de la salle d'essai (1) et se prolongent verticalement sur toute la hauteur H de la salle d'essai (1).

3. Salle d'essai (1) pour tester des systèmes selon la revendication 1, **caractérisée en ce que** les composants de chaque module (2) sont répartis sur des plans à des hauteurs différentes.

4. Salle d'essai (1) pour tester des systèmes selon la revendication précédente, **caractérisée en ce que** ledit échangeur d'eau (15) est positionné sur un plan supérieur par rapport audit échangeur à détente directe (14).

5. Salle d'essai (1) pour tester des systèmes selon l'une quelconque des revendications 3 et 4, **caractérisée en ce que** ledit échangeur à détente directe (14) est positionné sur un plan supérieur par rapport à un rez-de-chaussée sur lequel ledit système (4) à tester est positionné.

6. Salle d'essai (1) pour tester des systèmes selon l'une quelconque des revendications 3 à 5, **caractérisée en ce que** ledit circuit aéraulique comporte une bouche d'admission d'air extérieur (21) et une bouche de refoulement d'air (22) vers l'extérieur pour lesdits canaux (7, 8) d'échange d'air positionnés sur un plan supérieur par rapport audit échangeur d'eau (15).

7. Salle d'essai (1) pour tester des systèmes selon l'une quelconque des revendications 3 à 6, **caractérisée en ce que** ledit échangeur de chaleur à détente directe (14) est inclus dans un circuit à cycle de réfrigération dont les composants sont installés à l'extérieur dudit compartiment de positionnement (3).

8. Salle d'essai (1) pour tester des systèmes selon l'une quelconque des revendications précédentes, **caractérisée en ce qu'**au moins deux échangeurs de chaleur à eau (15, 23) sont prévus, l'un configuré pour transférer de la chaleur à l'air et l'autre configuré pour retirer la chaleur de l'air.

9. Salle d'essai (1) pour tester des systèmes selon la revendication 1, **caractérisée en ce que** lesdits moyens de ventilation forcée comprennent au moins un ventilateur (9).

10. Salle d'essai (1) pour tester des systèmes selon la revendication 1, **caractérisée en ce qu'**elle comprend sous ladite structure modulaire un réservoir d'eau (31) ayant un chemin de collecte en forme de labyrinthe servant à alimenter les systèmes à tester qui nécessitent de l'eau pour leur fonctionnement normal.

11. Salle d'essai (1) pour tester des systèmes selon la revendication 1, **caractérisée en ce que** ledit circuit aéraulique comporte des composants doubles disposés symétriquement par rapport à un plan vertical central dudit module (2).

12. Salle d'essai (1) pour tester des systèmes selon la revendication 1, **caractérisée en ce que** lesdits canaux et/ou le compartiment de positionnement (3) sont coniques de manière à être adaptés à la conversion de l'énergie cinétique en énergie de pression ou vice versa du flux d'air circulant dans ledit module (2).

13. Salle d'essai (1) pour tester des systèmes selon la revendication 1, **caractérisée en ce qu'**elle comprend au moins une cloison de séparation amovible (16) qui sépare physiquement deux modules (2) adjacents.

14. Salle d'essai (1) pour tester des systèmes selon la revendication 6, **caractérisée en ce que** le canal d'air (6) configuré pour la recirculation comprend un premier canal (24) qui se prolonge le long d'un deuxième plan et comporte une bouche d'entrée d'air (30) qui s'ouvre dans le compartiment de positionnement (3), un deuxième canal (25) qui relie au premier canal (24) une bouche de distribution d'air (26) qui s'ouvre dans le compartiment de positionnement (3) sur un rez-de-chaussée, un troisième canal (27) qui relie au premier canal (24) une bouche d'admission d'air (28) qui s'ouvre dans le compartiment de positionnement (3) sur un premier plan, et un quatrième canal (29) qui relie au premier canal (24) la bouche d'admission d'air extérieur (21), dans laquelle la porte (10) est appliquée sur la bouche d'admission d'air (28), la porte (11) est appliquée sur la bouche d'admission d'air (30), la porte (12) est appliquée sur la bouche d'admission d'air extérieur (21), et la porte (13) est appliquée sur la bouche de distribution (22) délivrant l'air vers l'extérieur, qui communique directement avec le compartiment de positionnement (3) et dans laquelle ledit échangeur à détente directe (14) est disposé transversalement dans le troisième canal (27) de manière à interagir avec un flux d'air en transit et ledit échangeur de chaleur à eau (15) est disposé transversalement dans le premier canal (24) de manière à interagir avec le flux d'air en transit.

15. Procédé de commande d'une salle d'essai selon la revendication précédente pour refroidir l'air ambiant à des températures inférieures à 0 °C, dans lequel le procédé prévoit les opérations suivantes dans une séquence temporelle :
sélectionner la circulation forcée de l'air le long dudit canal de recirculation (6) à travers ledit échangeur de chaleur à eau (15) ;
alimenter ledit échangeur de chaleur (15) en eau glycolée à une température supérieure à 0 °C et inférieure à la température de l'air extérieur introduit dans le compartiment de manière à refroidir et à déshumidifier l'air par condensation de la vapeur contenue dans l'air ;
alimenter ledit échangeur de chaleur (15) avec de l'eau glycolée à une température inférieure à 0 °C et supérieure à une température de réglage de manière à refroidir et à déshumidifier l'air par le givrage de la vapeur contenue dans l'air ;
sélectionner la circulation forcée de l'air le long dudit canal de recirculation (6) à travers ledit échangeur de chaleur à détente directe (14) ; et
activer le cycle de réfrigération à détente directe afin de refroidir l'air à la température de réglage.
